Europäisches Patentamt

European Patent Office

Office européen des brevets

(19)

(11) Publication number: 0 185 922
A2

## (12) EUROPEAN PATENT APPLICATION

(21) Application number: **85114632.4**

(22) Date of filing: **18.11.85**

(51) Int. Cl.⁴: **A 42 B 3/00**

(30) Priority: **24.12.84 US 686433**
**15.04.85 US 723354**

(43) Date of publication of application:
**02.07.86 Bulletin 86/27**

(84) Designated Contracting States:
**CH DE FR GB IT LI**

(71) Applicant: **Slarve, Michael**
**11222 Balcom Avenue**
**Granada Hills California 91344(US)**

(72) Inventor: **Slarve, Michael**
**11222 Balcom Avenue**
**Granada Hills California 91344(US)**

(74) Representative: **Howden, Christopher Andrew et al,**
**FORRESTER & BOEHMERT Widenmayerstrasse 4/l**
**D-8000 München 22(DE)**

(54) **Motorcycle safety helmet and brake lamp system.**

(57) A safety helmet and brake lamp system is provided for a motorcycle rider, wherein an auxiliary brake lamp is incorporated into a motorcycle rider's safety helmet for illumination concurrently with illumination of at least one conventional brake lamp on the motorcycle. In one form, the auxiliary brake lamp is mounted on the helmet and connected *via* a quick detachable electrical connector in parallel with the brake lamp on the motorcycle. In another form, the auxiliary brake lamp is mounted on the helmet, together with a radio signal receiver apparatus for causing illumination of the auxiliary brake lamp upon receipt of an actuation signal from a radio transmitter on the motorcycle. The radio transmitter provides the actuation signal whenever the motorcycle brake lamp is illuminated.

FIG.1

Croydon Printing Company Ltd.

"Motorcycle Safety Helmet and Brake Lamp System"

This invention relates generally to a motorcycle safety helmet.

An illustrated advertisement in the April 1984 issue of "Better Homes and Gardens" discloses an auxiliary brake lamp mounted on an automobile at a central position above an autombile trunk lid.   -

A variety of motorcycle helmets having associated auxiliary lighting systems are known.  For example US-A-4,319,308 discloses a helmet for a motorcycle rider having multiple externally visible lights to provide a selected decorative or sensory effect.  IT-A-639,512 discloses a helmet for motorcyclists wherein the helmet carries turn signal lamps.  The signal lamps can be operated by separate handlebar-mounted switches to indicate cycle turning direction, or to flash as emergency warning signals.

It is an object of the present invention at least to mitigate the problems associated with prior art systems.

Accordingly, the invention provides a system for use with a motorcycle or the like having brakes and means for applying the brakes to slow or stop the motorcycle, the combination comprising: a motorcycle rider's helmet; an auxiliary brake lamp mounted on said helmet; and means responsive to actuation of the brakes for illuminating said auxiliary brake lamp to provide visible indication of actuation of the brakes.

The auxiliary brake lamp is combined with means for illuminating the auxiliary lamp in accordance with actuation of a conventional motorcycle braking system, such as in accordance with illumination of at least one brake lamp mounted on the motorcycle.

In one form, the present invention provides the auxiliary brake lamp mounted on or within a rear surface of a helmet in a rearwardly visible position. The auxiliary brake lamp is coupled electrically with a conventional brake lamp system on the motorcycle for illumination concurrently with illumination of the motorcycle brake lamp. More particularly, an electrical circuit is connected between the motorcycle brake lamp and the auxiliary brake lamp for illuminating the two lamps together, for example, during night riding. The circuit is adapted to increase the illumination intensity of both lamps concurrently whenever the motorcycle brakes are applied. The circuits are associated with a quickly detachable electrical connector for rapid connection and disconnection as desired by the cycle rider.

In an alternative form, the auxiliary brake lamp on the helmet is combined with a helmet-mounted radio signal receiver apparatus. This receive apparatus is tuned to receive an actuation signal from a radio transmitter on the motorcycle, wherein the actuation signal is transmitted whenever the motorcycle brakes are applied. The receiver, upon receipt of the actuation signal, illuminates the auxiliary brake lamp at a high intensity level indicative of brake application. The radio transmitter and receiver apparatus may also be used with a secondary actuation signal to cause auxiliary brake lamp illumination at a normal lower intensity level, for example, during night riding with the motorcycle brakes not applied.

In either embodiment, a substantially white lamp may also be mounted at a front surface of the helmet and illuminated constantly during motorcycle operation or whenever a corresponding motorcycle headlight is illuminated. The helmet-mounted white lamp provides a convenient light source when the motorcycle requires repair at night. The rider can take off the helmet and direct the white lamp toward the desired area so that repairs may be made. During such repairs the auxiliary brake lamp at the rear of the helmet will provide a visible warning which can be easily detected by other motorists.

In order that the present invention may be more readily understood, and so that further features thereof may be appreciated, embodiments of the invention will now be described, by way of example, with reference to the accompanying drawings, in which:

FIGURE 1 is a perspective view of a helmet constructed in accordance with the present invention;

FIGURE 2 is a rear elevational view of the helmet shown in Figure 1;

FIGURE 3 is a diagrammatic view of a motorcycle hand brake system;

FIGURE 4 is a side elevational view, partly in section, of the helmet shown in Figure 1;

FIGURE 5 is a front elevational view of an alternative form of light apparatus embodying the invention, for assembly with a motorcycle helmet;

FIGURE 7 is a side elevational view of the apparatus shown in Figure 6;

FIGURE 8 is a rear elevational view of a helmet with the apparatus of Figure 6 mounted thereon;

FIGURE 9 is a rear elevational view of a motorcycle with the helmet of Figure 1 electrically connected thereto;

FIGURE 10 is a perspective view of a helmet constructed in accordance with a further alternative form of the present invention;

FIGURE 11 is a rear elevational view of the helmet shown in Figure 10;

FIGURE 12 is a diagrammatic view of a motorcycle hand and foot brake system, incorporating a radio transmitter for generating an actuation signal upon brake system application.

FIGURE 13 is a side elevational view, partly in section, of the helmet shown in Figure 10; and

FIGURE 14 is a diagrammatic view of an electrical circuit in the helmet of Figure 10 incorporating a radio receiver apparatus for responding to the actuation signals generated by a radio transmitter.

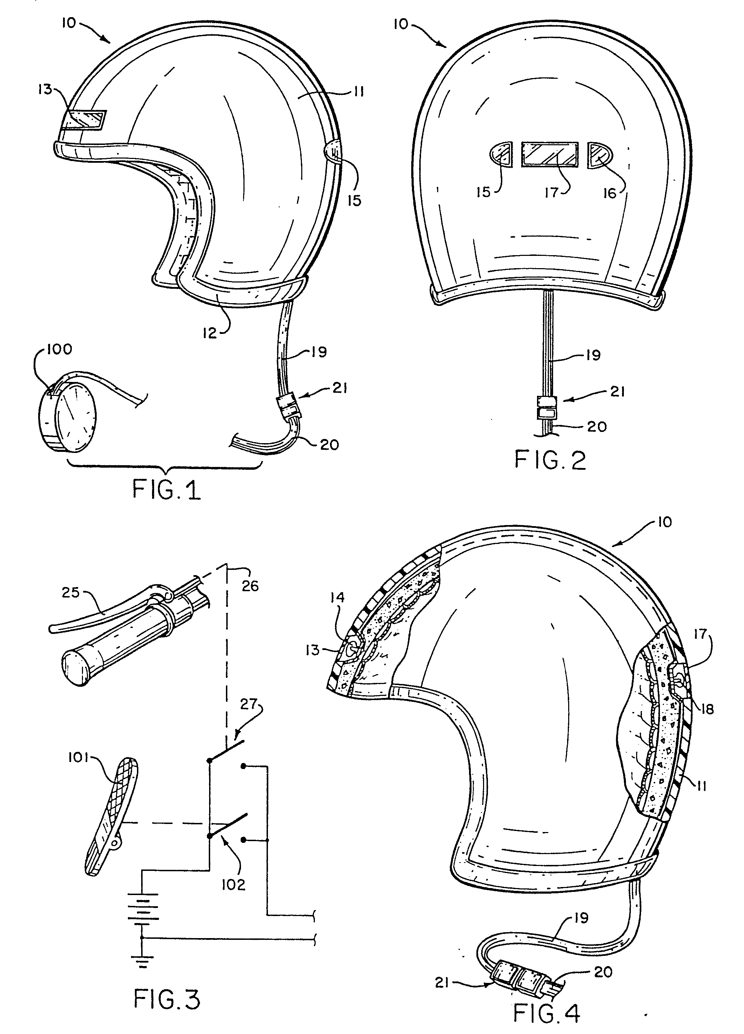

The helmet of the present invention is referred to generally by reference numeral 10 in Figure 1. The helmet 10 may be conventional in overall design and construction, except for the inventive differences described herein. More particularly, the helmet 10 includes a hard external shell 11 with piping 12 along the edges thereof. A lens 13 at an upper front region of the helmet is provided to diffuse light from a substantially white lamp 14 mounted within the helmet at a position behind the lens 13.

At a rear surface of the helmet shell 11, as shown in Figure 2, left and right turn signal lenses 15 and 16 are mounted on opposite sides of a central brake lamp lens 17. An auxiliary brake lamp is mounted within the helmet at a position closely behind the brake lamp lens 17, also as shown in Figure 4. Turn signal lamps (not shown) are similarly mounted within the helmet behind their respective turn signal lenses 15 and 16. All of the lamps are conveniently exposed through aligned openings in the helmet shell 11, wherein these openings are bridged by the respective lenses. An internal liner 35 of a styrofoam padding or the like isolates the lamps from the head of the motorcycle rider.

The above-described helmet lamps, including the auxiliary brake lamp 18, are electrically connected to electrical circuits of a motorcycle via groups of wires 19 and 20. More specifically, the group of wires 19 is electrically connected to the various helmet lamps and protrudes downwardly from the helmet for connection, via a conventional quick detachable electrical connector 21. The connector 21 in turn couples the wires 19 electrically with the second group of wires 20 which thus electrically couples the helmet lamps into the motorcycle eletrical circuits for lamp illumination in accordance with illumination of corresponding lamps conventionally provided on the motorcycle.

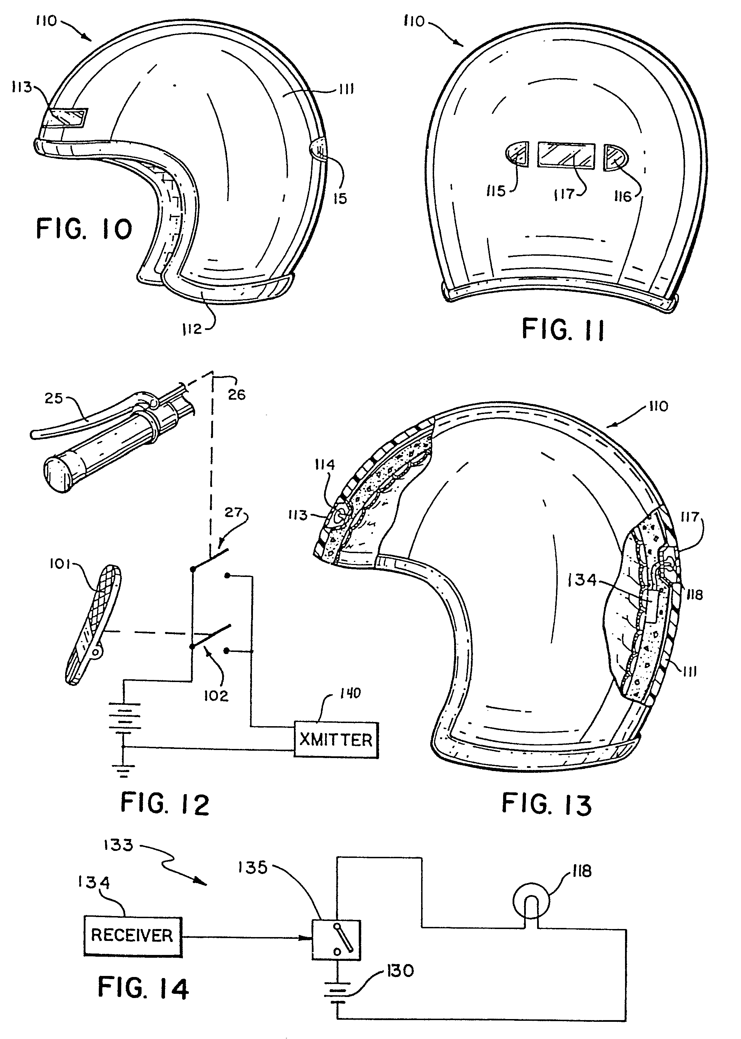

As shown in Figure 3, a standard manually operated brake handle 25 on the motorcycle handlebar is operable _via_ a brake cable 26 to close a normally open switch 27 to close an electrical circuit for energizing brake lamps 22 and 23 (Figure 9) mounted on the motorcycle in a rearwardly presented position. A brake pedal 101 (Figure 3) may also be provided for separately closing a parallel-connected switch 102 to illuminate the motorcycle lamps 22 and 23. When illuminated by actuation of the brake handle 25 or the pedal 101, the brake lamps 22 and 23 have a high intensity level to indicate application of the motorcycle brake system thereby indicating slowing or stopping of the motorcycle. Additional circuitry is normally provided for illuminating the brake lamps 22 and 23 at a low intensity level, for example, during normal night riding of the motorcycle when the brake system is not applied, or for intermittent flashing operation, and the like.

The electrical wire group 20 is coupled in parallel with the electrical system for illuminating the brake lamps 22 and 23. With this arrangement, the auxiliary brake lamp 18 on the helmet is illuminated concurrently with the motorcycle brake lamps 22 and 23, and with an intensity corresponding with the intensity of the motorcycle brake lamps. As a result, additional and highly visible indication is provided to motorists behind the motorcycle with regard to the cycle rider's presence and intention to slow or stop, etc.

If desired, as shown in Figure 9, the helmet 10 may be placed on the ground so that the substantially white lamp 14 at the front of the helmet will provide a beam 34 for illuminating the motorcycle. This is especially advantageous in the event that night repair is required. During such repair, the brake lamps 22 and 23 as well as the auxiliary brake lamp 18 on the helmet are illuminated and/or may be set to flash on an intermittent basis to provide an emergency warning signal.

The invention thus provides a relatively simple system for increasing the safety of motorcycle operation by providing increased visbility and warning. The electrical connections between the helmet and the motorcyle are relatively simple in nature, normally providing the wire group 20 as a relatively long leader for convenient connection to the wire group 19 at a position close to the helmet 10. For added convenience, the wire group 20 may be incorporated into a conventional retractor IUU as viewed in Figure I and which may be mounted at a convenient position on the motorcycle.

In use, the motorcycle rider would mount the vehicle while wearing the helmet, grasp the end of the wire group 20 protruding from the retractor IUU, pull the wires to a selected length for comfort and mate the connector 21. Moreover, if desired, the electrical wiring connected to the helmet may be of lightweight gauge or associated with a break-away connector fitting (not shown) to ensure separation from the motorcycle in the event of an emergency.

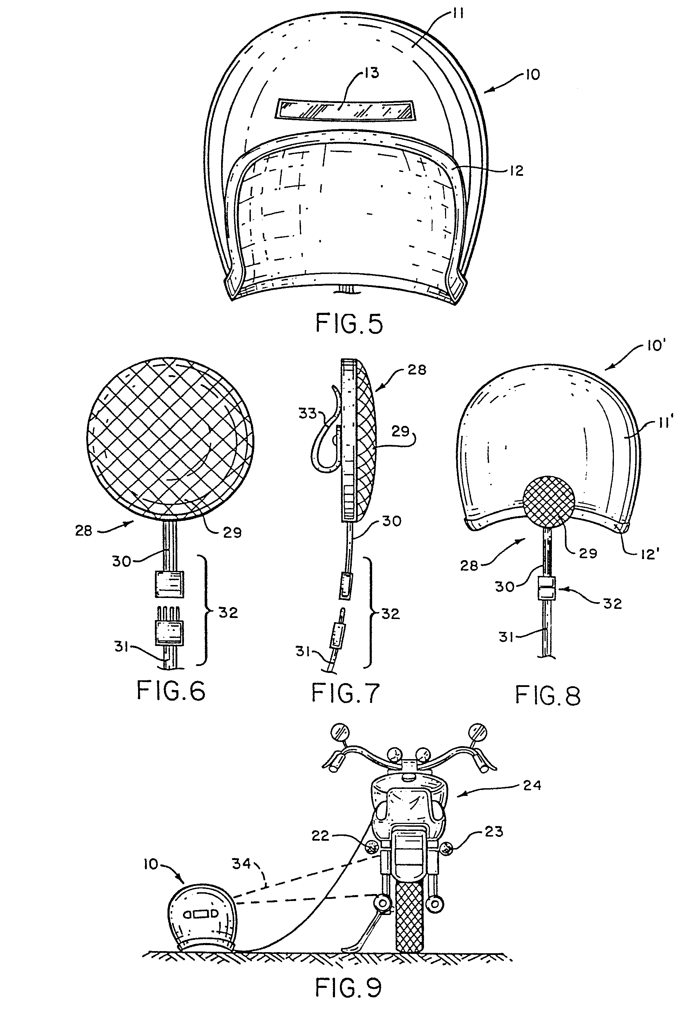

In one alternative form of the invention as viewed in Figures 6 to 8, a generally conventional motorcycle helmet 10' (Figure 8) having a hard outer shell 11' and optional piping 12' may be used with an easily mounted auxiliary brake lamp device 28.

More specifically, as shown in Figures 6 and 7, the auxiliary brake lamp device comprises an auxiliary brake lamp 29 provided with wires 30 for connection, via a quickly detachable electrical connector 32, to additional wires 31 connected to the motorcycle electrical circuits in the manner described previously with respect to Figures I to 5. The auxiliary brake lamp 29 further carries a spring clip 33 by which the device 28 can be clipped quickly to the helmet IU' in the rearwardly presented position shown in Figure 8. In use, as described with respect to Figures I to 5, the auxiliary brake lamp 29 is illuminated in accordance with the illumination of the motorcycle brake lamps 22 and 23 (Figure 9) to provide additional visibility of the cycle and rider and further to provide enhanced warning of slowing or stopping of the motorcycle.

A further alternative form of the invention is shown in Figures IO to I4, wherein components identical to those described in the embodiment of Figures I to 5 are referred to by common reference numerals increased by one hundred. In this alternative embodiment, the helmet 110 carries an auxiliary brake lamp 118 (Figure 13) for concurrent operation with at least one brake lamp of a motorcycle braking system, such as the brake lamps 22 and 23 shown in Figure 9. However, the auxiliary brake lamp 118, as shown in Figure 13, is illuminated without requiring direct electrical connection with electrical circuits on the motorcycle.

More specifically, as shown in Figures 10, 11 and 13, the modified helmet 110 includes a hard external shell 111 which may also include optional piping along the lower margins thereof. A substantially white front lamp 114 is mounted within an upper front region of the helmet behind a lens 113. Turn signal lamps (not shown) are similarly mounted behind associated lenses 115 and 116 at a rear surface of the helmet 110. The auxiliary brake lamp 118 is mounted within the helmet behind an associated lens 117 which, as shown in Figure 11, is conveniently located between the turn signal lenses 115 and 116. All of the helmet lamps including the auxiliary brake lamp 118 are connected to electrical circuits within the helmet 110 which include a convenient power source in the form of a battery 130 or the like, as shown in Figure 14 with respect to the brake lamp 118.

The helmet 110 further includes radio signal receiver apparatus, referred to generally by the reference numeral 133 in Figure 14. This receiver apparatus includes a compact radio signal receiver 134 mounted at a convenient location within the helmet and operable upon receipt of an actuation signal to close an electronic switch 135 or the like, thereby connecting the auxiliary brake lamp 118 to the power source 130.

A radio transmitter 140 is provided as part of the motorcycle brake system to generate the actuation signal thereby controlling illumination of the auxiliary brake lamp 118. More particularly with reference to Figure 12, the radio transmitter is coupled into the motorcycle electrical system for generating the actuation signal upon operation of a standard brake handle 25 via a cable 26 to close a switch 27 or a foot pedal 101 to close a switch 102, as described previously with respect to Figures 1 to 5. Actuation of these brake devices simultaneously applies the motorcycle brakes and further illuminates the motorcycle brake lamps 22 and 23 (Figure 9) with high intensity. The actuation signal from the transmitter 140 is received by the receiver 134 for concurrent and corresponding high intensity illumination of the auxiliary brake lamp 118.

A variety of further modifications and alternatives are believed to be

0185922

apparent with respect to the safety helmet and brake lamp system described herein. For example, it will be understood that the receiver apparatus 133 may be permanently mounted within the helmet or mounted in any manner for simple detachment therefrom, as desired. Moreover, it will be understood that electrical power may be supplied to the auxiliary brake lamp 118 in any suitable manner including, for example, the illustrative battery 130 or, in the alternative, the lamp 118 may be operated by power radiated from the transmitter 140. Still further, the transmitter 140 and receiver 134 may be adapted for duel signal response for illuminating the lamp 118 at a low normal intensity during normal motorcycle operation or at a higher intensity indicative of brake system application.

The features disclosed in the foregoing description, in the following claims and/or the accompanying drawings may, both separately and in any combination thereof, be material for realising the invention in diverse forms thereof.

**0185922**

CLAIMS:

1.      A system for use with a motorcycle or the like having brakes and means for applying the brakes to slow or stop the motorcycle, the combination comprising: a motorcycle rider's helmet; an auxiliary brake lamp mounted on said helmet; and means responsive to actuation of the brakes for illuminating said auxiliary brake lamp to provide visible indication of actuation of the brakes.

2.      A system according to Claim 1, wherein the motorcycle includes a brake lamp on the motorcycle, an electrical circuit for illuminating the motorcycle brake lamp, and switch means for increasing the illumination in or around the motorcycle brake lamp upon actuation of the motorcycle brakes, and further comprising at least first and second wires connected from said switch means to supply power when said brakes are applied; and third and fourth wires connected to supply power to said auxiliary brake lamp.

3.      A system according to Claim 2, further including a quick detachable elecrical connector for connecting said first and second wires to said third and fourth wires respectively.

4.      A system according to Claim 1 or Claim 2, wherein retractable means are mounted on said motorcycle said third and fourth wires being retractably carried by said retractable means.

5.      A system according to any one of Claims 1 to 4, wherein said auxiliary brake lamp is removably secured to said helmet.

6.      A system according to Claim 5, wherein said auxiliary brake lamp has a spring clip to fit inside said helmet and to hold said auxiliary brake lamp against a rearward external surface thereof.

7.      A system according to any one of Claims 1 to 6, wherein said means responsive to actuation of the brakes comprises a radio transmitter on the motorcycle and responsive to actuation of the brakes to generate an actuation signal, and a receiver on the helmet responsive to said actuation

0185922

signal for illuminating said auxiliary brake lamp.

8.    A system according to Claim 7 including means for illuminating said auxiliary brake lamp at a first intensity during operation of the motorcycle when the brakes are not actuated, said receiver being responsive to said actuation signal to cause the illumination of said auxiliary brake lamp to increase to a second intensity upon actuation of the brakes.

9.    A system according to Claim 7 or 8, further including a battery and an electronic switch connected in a series electrical circuit with said auxiliary brake lamp, said receiver being responsive to said actuation signal to cause said electronic switch to close.

FIG.1

FIG.2

FIG.3

FIG.4

FIG.5

FIG.6

FIG.7

FIG.8

FIG.9

0185922

FIG. 10

FIG. 11

FIG. 12

FIG. 13

FIG. 14

XMITTER

RECEIVER